# EUROPEAN PATENT SPECIFICATION

(11) **EP 3 613 569 B1**
(45) Date of publication and mention of the grant of the patent: **08.04.2026**
(21) Application number: 18189902.2
(22) Date of filing: 21.08.2018
(51) Int. Cl.: B29C 70/86, B60B 25/00, B29C 70/54, B29C 70/70

(54) **METHOD OF MANUFACTURING A CARBON FIBER WHEEL RIM**
VERFAHREN ZUR FERTIGUNG EINER KOHLENSTOFFFASERRADFELGE
PROCÉDÉ DE FABRICATION D'UNE JANTE DE ROUE EN FIBRE DE CARBONE

(43) Date of publication of application: 26.02.2020
(73) Proprietor: Marshal Industrial Corp., VG1110 Tortola (VG)
(72) Inventor: Tsai, Ming-Jen, 350 Miaoli County (TW)
(74) Representative: Lang, Christian

(56) References cited:
- EP-A1- 3 028 871
- EP-A2- 2 030 765
- DE-A1- 102015 102 466

## Description

### BACKGROUND OF THE INVENTION

### Field of the Invention

The present invention relates to a method of manufacturing a carbon fiber wheel rim.

### Description of the Prior Art

A conventional method of manufacturing a carbon fiber rim includes following steps: pre-immersing carbon fiber sheets in resin, pasting the carbon fiber sheets with the resin on an annular core (such as a bladder) into several layers, and placing the processed annular core in a mold and molding by thermoforming.

However, the conventional method has many disadvantages. For example, the conventional method requires more resin to pre-immerse the carbon fiber sheets; the pre-immersed carbon fiber sheets need to be pasted by manpower, which is time-consuming and labor-intensive; directions of carbon fibers of the carbon fiber sheets are inconsistent and discontinuous, and transmission of stress may be discontinuous when the carbon fiber sheets are overlapped with each other so that structural integrity and structural strength of the wheel rim are poor; each of the overlaps of the carbon fiber sheets has large, many and uneven gaps which may result in more large bubbles after the thermoforming and low yield.

The present invention is, therefore, arisen to obviate or at least mitigate the above-mentioned disadvantages.

Conventional techniques of making a carbon fiber wheel rim are known from documents EP 2 030 765 A2 and EP 3 028 871 A1, wherein document EP 2 030 765 A2 teaches a method for producing a rim ring for a tire rim, comprising the steps of providing an outer rim profile made of hardened composite fibrous material; providing a plastic shaping element; providing at least one top layer made of composite fibrous material; inserting said plastic shaping element radially within said outer rim profile, and positioning said top layer relative to said plastic shaping element and to said outer rim profile such that at least part of said top layer extends from said plastic shaping element onto an outside of said outer rim profile. Document EP 3 028 871 A1 discloses another method for making a carbon fiber wheel rim including the steps of: preparing an outer supporting piece; winding a carbon-fiber yarn around the outer supporting piece to form carbon fiber layers and to constitute an engaging seat preform; connecting an inner supporting piece to the engaging seat preform; connecting a reinforcement piece to the inner supporting piece; winding a carbon-fiber yarn around an assembly of the engaging seat preform, the inner supporting piece and the reinforcement piece to form carbon fiber layers; fixing the assembly with the carbon fiber layers to form an outer frame preform; and cutting the outer frame preform and the engaging seat preform to form a trench and removing the outer supporting piece therefrom.

### SUMMARY OF THE INVENTION

The main object of the present invention is to provide a method of manufacturing a carbon fiber wheel rim which is simple, more efficient and with high yield, and the wheel rim made by the method has preferable structural strength.

To achieve the above and other objects, the present invention provides a method of manufacturing a carbon fiber wheel rim according to claim 1, including following steps of: preparing a core ring, including a core material which is disintegrable and annular; continuously obliquely winding at least one first dry carbon yarn around the core ring, to form a first semi-finished rim; placing the first semi-finished rim in a mold, and performing vacuuming, resin injection and thermoforming, to form a second semi-finished rim; removing the second semi-finished rim out of the mold, and disintegrating and removing the core material, wherein the first dry carbon yarn includes a plurality of carbon fibers, wherein the at least one first dry carbon yarn is wound around the core ring into several layers, and winding angles of the at least one first dry carbon yarn of every neighboring two of the layers being different, and wherein, after the second semi-finished rim is removed out of the mold or after removing the core material, part of the second semi-finished rim and the molding ring are removed to form an annular tire groove. The step of preparing the core ring includes following steps of: preparing a molding ring; applying at least one carbon fiber material on the molding ring in a covering manner to form an upper semi-finished rim; arranging the core material annularly on an inner side of the upper semi-finished rim; and arranging a reinforcement member on an inner side of the core material.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Figs. 1 and 2 are schematic diagrams of manufacturing an upper semi-finished rim of a preferable embodiment of the present invention;
Figs. 3 and 4 are schematic diagrams of manufacturing a core ring of a preferable embodiment of the present invention;
Figs. 5 and 6 are schematic diagrams of manufacturing a first semi-finished rim of a preferable embodiment of the present invention;
Fig. 7 is a schematic diagram of a second semi-finished rim with an annular groove of a preferable embodiment of the present invention;
Fig. 8 is a stereogram of a carbon fiber rim of a preferable embodi ment of the present i nventi on;
Fig. 9 is a flow diagram of a preferable embodiment of the present invention.

### DETAILED DESCRIPTION OF THE PREFERRED EMBODIMENTS

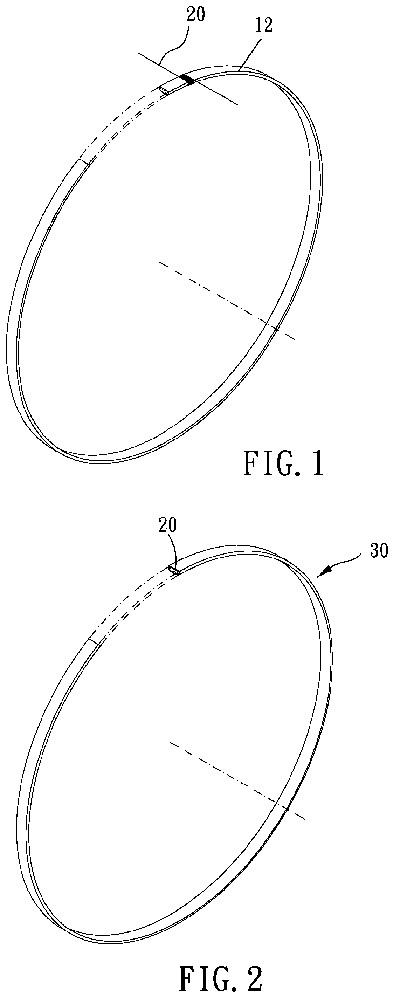

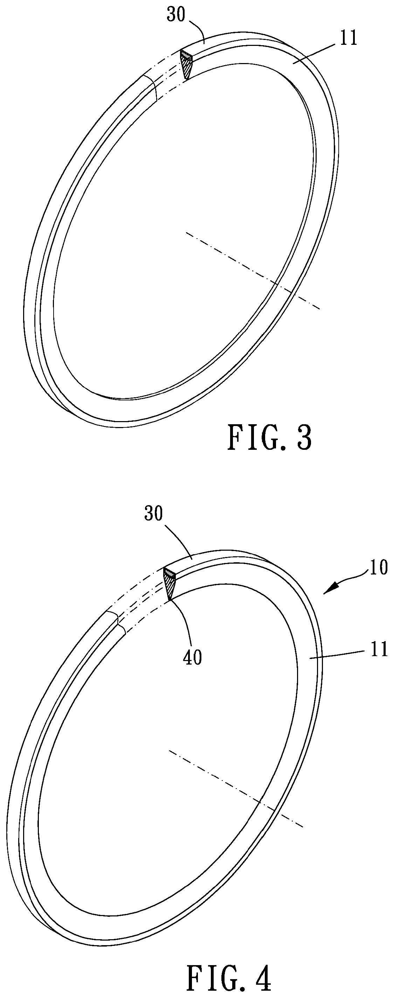

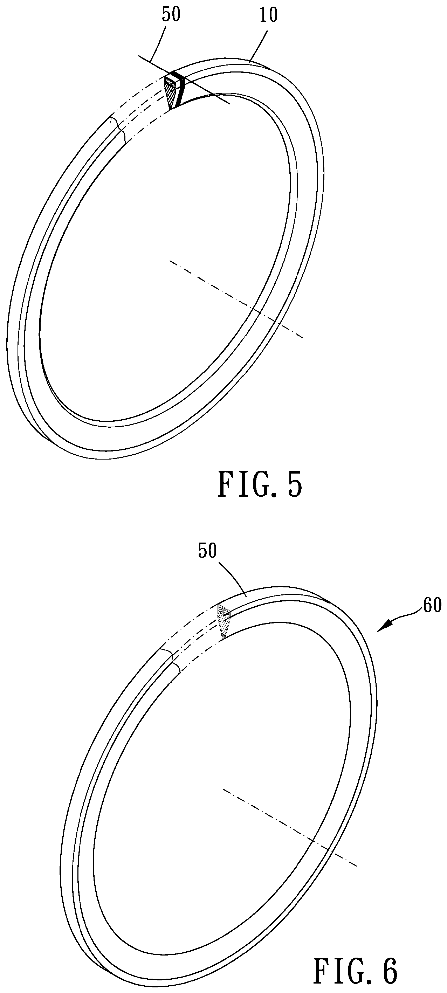

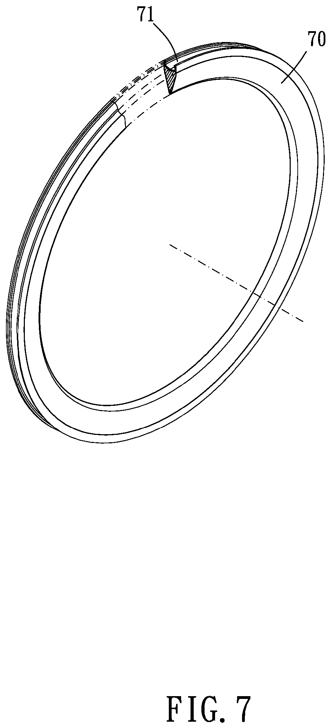

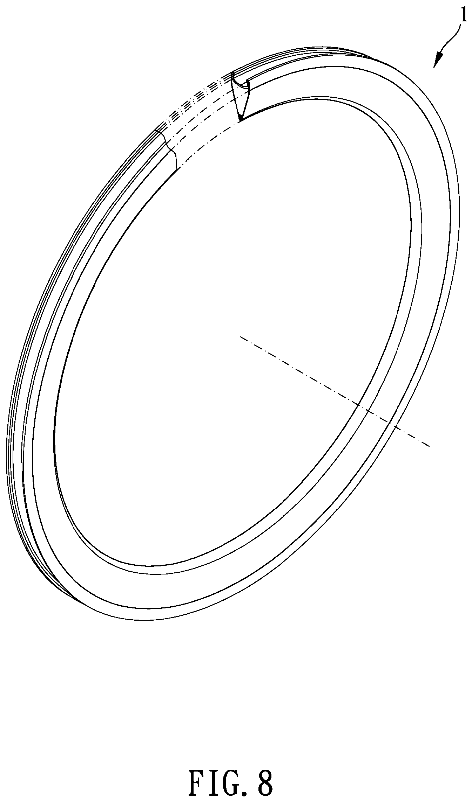

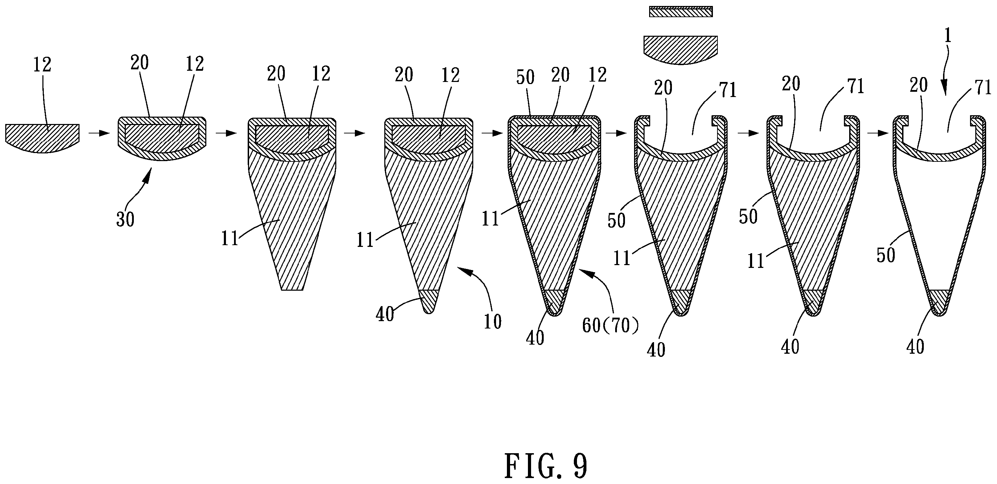

Please refer to Figs. 1 to 9 for a preferable embodiment of the present invention. A method of manufacturing a carbon fiber wheel rim of the present invention includes following steps.

A core ring 10 is prepared. The core ring 10 includes a core material 11 which is disintegrable and annular. 'Disintegrable_ may be physical or chemical. In this embodiment, the step of preparing the core ring 10 includes following steps of: preparing a molding ring 12; coveringly applying at least one carbon fiber material on the molding ring 12, for example, continuously obliquely winding at least one second dry carbon yarn 20 around the molding ring 12, to form an upper semifinished rim 30; arranging the core material 11 annularly on an inner side of the upper semifinished rim 30; arranging a reinforcement member 40 on an inner side of the core material 11. The core material 11 is selected from one of polymer material (foamable), plastic, ceramic, salt, metal, wax or other materials which is removable. The molding ring 12 and the reinforcement member 40 may be made of heat resistant and hard material (such as carbon fiber composite) so as to improve structural strength of the carbon fiber rim. However, the reinforcement member 40 may be omitted. The carbon fiber material includes at least one second dry carbon yarn 20 which includes a plurality of carbon fibers. The at least one second dry carbon yarn 20 is wound around the molding ring 12 into several layers. Winding angles of the second dry carbon yarn 20 of every neighboring two of the layers are different so as to improve tensile strength of the carbon fiber rim 1 for preferable durability. However, it is also feasible to paste at least one pre-immersed carbon fiber sheet on the molding ring to form the upper semifinished rim.

At least one first dry carbon yarn 50 is continuously obliquely wound around the core ring 10, to form a first semifinished rim 60. The first dry carbon yarn 50 includes the plurality of carbon fibers. The at least one first dry carbon yarn 50 is wound around the core ring 10 into several layers, and winding angles of the at least one first dry carbon yarn 50 of every neighboring two of the layers are different so as to provide high tensile strength of the carbon fiber rim1 for preferable durability.

The first semifinished rim 60 is placed in a mold, and vacuuming, resin injection and thermoforming (curing) are carried out, to form a second semifinished rim 70. The vacuuming allows the resin to fully infiltrate into apertures between the at least one first and second dry carbon yarn 50, 20 so as to improve integrity and toughness of the carbon fiber rim 1. At this step, it is unnecessary to provide an internal pressure or force to push the first semifinished rim 60 toward an inner surface of the mold and there is only low heat deformation of the core material 11, thus increasing production yield.

The second semifinished rim 70 is removed out of the mold and the core material 11 is disintegrated and removed. Any of the polymer material, plastic, ceramics and salt is disintegrated and removed by liquid. Any of the plastic and the ceramic is made of powder by compression molding. The liquid may be water or any solvent which can, physically or chemically, separate, decompose or melt the core material 11. Any of the metal and the wax is heated to melt and removed. When the core material 11 is selected from one of the metal and the wax, a temperature of the thermoforming is lower than a melting point of the core material 11. According to a period of the thermoforming, the resin may have a different melting point after being cured. Generally, the longer the curing period is, the higher the melting point of the resin is. For instance, the melting point of the resin which is cured can reach 230°C by heating at 180°C (a glass transition temperature (Tg) of the resin) for 30 to 45 minutes. A melting point of a selected one of the metal and the wax is lower than a melting point of the resin applied in the resin injection which is cured and higher than the Tg of the resin. For example, the melting point of the core material 11 is 200°C and the Tg of the resin is 180°C, and the melting point of the resin which is cured is 230°C so that the core material 11 is removable by heating to melt at a temperature between 200°C and 230°C.

Finally, a part of the second semifinished rim 70 is removed to form an annular tire groove 71 for tire assembly. The step of forming the annular tire groove 71 may also be performed after removing the core material 11. It is also feasible to continuously obliquely wind the at least one first dry carbon yarn around the core material without the upper semifinished rim and an annular groove is directly formed on the second semifinished rim. The annular groove is configured to be assembled with a tubular tire.

In summary, the dry carbon yarn is wound continuously so that the structure is tight and uniform and has preferable structural integrity. The vacuuming, resin injection and thermoforming can decrease bubbles and improve production yield and structural strength. It is unnecessary to use a bladder during molding, which reduces the steps of inflation, deflation and removing from the mold and results in a simple and rapid manufacturing process.

Although particular embodiments of the invention have been described in detail for purposes of illustration, various modifications and enhancements may be made without departing from the scope of the invention that is defined by the appended claims. Accordingly, the invention is not to be limited except as by the appended claims.

## Claims

1. A method of manufacturing a carbon fiber wheel rim, including following steps of:
preparing a core ring (10), including a core material (11) which is annular;
continuously obliquely winding at least one first dry carbon yarn (50) around the core ring (10), to form a first semi-finished rim (60), wherein the first dry carbon yarn (50) includes a plurality of carbon fibers, wherein the at least one first dry carbon yarn (50) is wound around the core ring (10) into several layers, and winding angles of the at least one first dry carbon yarn (50) of every neighboring two of the layers are different;
placing the first semi-finished rim (60) in a mold, and performing vacuuming, resin injection and curing, to form a second semi-finished rim (70);
removing the second semi-finished rim (70) out of the mold;
wherein the step of preparing the core ring (10) includes the following steps of:
preparing a molding ring (12);
applying at least one carbon fiber material on the molding ring (12) in a covering manner to form an upper semi-finished rim (30);
arranging the core material (11) annularly on an inner side of the upper semi-finished rim (30), and
arranging a reinforcement member (40) annularly on an inner side of the core material (11);
**characterized in that**
the core material (11) is disintegrable and removed in a step of disintegrating and removing the core material (11) following the step of removing the second semi-finished rim (70) out of the mold;
wherein, after the second semi-finished rim (70) is removed out of the mold or after removing the core material (11), part of the second semifinished rim (70) and the molding ring (12) are removed to form an annular tire groove (71);
wherein the core material (11) is selected from one of metal and wax; and
wherein any of the metal and the wax is heated to melt and to be removed.

2. The method of claim 1, wherein the carbon fiber material includes at least one second dry carbon yarn (20) which includes a plurality of carbon fibers, the at least one second dry carbon yarn (20) is continuously obliquely wound around the molding ring (12) into several layers, and winding angles of the at least one second dry carbon yarn (20) of every neighboring two of the layers are different.

3. The method of claim 1, wherein a melting point of a selected one of the metal and the wax is lower than a melting point of resin applied in the resin injection which is cured and higher than a glass transition temperature (Tg) of the resin.

## Patentansprüche

1. Verfahren zur Herstellung einer Kohlenstofffaserradfelge, welches folgende Schritte umfasst:
Vorbereiten eines Kernrings (10), der ein Kernmaterial (11) beinhaltet, welches ringförmig ist;
kontinuierliches, schräges Wickeln von mindestens einem ersten trockenen Kohlenstoffgarn (50) um den Kernring (10) herum, um eine erste halbfertige Felge (60) zu bilden, wobei das erste trockene Kohlenstoffgarn (50) eine Vielzahl von Kohlenstofffasern umfasst, wobei das mindestens eine erste trockene Kohlenstoffgarn (50) in mehreren Lagen um den Kernring (10) gewickelt ist, und die Windungswinkel des mindestens einen ersten trockenen Kohlenstoffgams (50) von jeweils zwei benachbarten Lagen sind unterschiedlich;
Platzieren der ersten halbfertigen Felge (60) in einer Form und Durchführen einer Vakuumierung, Harzinjektion und Aushärtung, um eine zweite halbfertige Felge (70) zu bilden;
Entnehmen der zweiten halbfertigen Felge (70) aus der Form;
wobei der Schritt des Vorbereitens des Kernrings (10) die folgenden Schritte umfasst:
Vorbereiten eines Formrings (12);
Aufbringen von mindestens einem Kohlenstofffasermaterial auf den Formring (12) in einer deckenden Weise, um eine obere halbfertige Felge (30) zu bilden;
ringförmiges Anordnen des Kernmaterials (11) an einer Innenseite der oberen halbfertigen Felge (30), und
ringförmiges Anordnen eines Verstärkungselements (40) an einer Innenseite des Kernmaterials (11);
**dadurch gekennzeichnet, dass**
das Kernmaterial (11) zersetzbar ist und in einem Schritt zur Zersetzung und Entfernung des Kernmaterials (11) entfernt wird, welcher auf den Schritt des Entnehmens der zweiten halbfertigen Felge (70) aus der Form folgt;
wobei, nachdem die zweite halbfertige Felge (70) aus der Form herausgenommen wurde oder nach dem Entfernen des Kernmaterials (11), ein Teil der zweiten halbfertigen Felge (70) und der Formring (12) entfernt werden, um eine ringförmige Reifennut (71) zu bilden;
wobei das Kernmaterial (11) wahlweise entweder Metall oder Wachs ist; und
wobei das Metall oder das Wachs erhitzt wird, um zu schmelzen und entfernt zu werden.

2. Verfahren nach Anspruch 1, bei welchem das Kohlenstofffasermaterial mindestens ein zweites trockenes Kohlenstoffgarn (20) umfasst, das eine Vielzahl von Kohlenstofffasern umfasst, wobei das mindestens eine zweite trockene Kohlenstoffgarn (20) in mehreren Lagen kontinuierlich um den Formring (12) gewickelt ist, und Windungswinkel des mindestens einen zweiten trockenen Kohlenstoffgarns (20) von jeweils zwei benachbarten Lagen unterschiedlich sind.

3. Verfahren nach Anspruch 1, bei welchem ein Schmelzpunkt eines ausgewählten Metalls oder Wachses niedriger ist als ein Schmelzpunkt des bei der Harzinjektion verwendeten Harzes, das ausgehärtet ist, und höher ist als eine Glasübergangstemperatur (Tg) des Harzes.

## Revendications

1. Procédé de fabrication d'une jante de roue en fibre de carbone, incluant les étapes suivantes de :
préparation d'un anneau central (10), incluant un matériau central (11) qui est annulaire ;
enroulement en continu de manière oblique d'au moins un premier fil de carbone sec (50) autour de l'anneau central (10) afin de former une première jante semi-finie (60), dans lequel le premier fil de carbone sec (50) inclut une pluralité de fibres de carbone, dans lequel le au moins premier fil de carbone sec (50) est enroulé autour de l'anneau central (10) en plusieurs couches, et des angles d'enroulement de l'au moins un premier fil de carbone sec (50) de chaque paire de couches voisines sont différents ;
placement de la première jante semi-finie (60) dans un moule et réalisation de la mise sous vide, de l'injection de résine et du durcissement afin de former une seconde jante semi-finie (70) ;
retrait de la seconde jante semi-finie (70) du moule ;
dans lequel l'étape de préparation de l'anneau central (10) inclut les étapes suivantes de :
préparation d'un anneau de moulage (12) ;
application d'au moins un matériau en fibre de carbone sur l'anneau de moulage (12) d'une manière recouvrante afin de former une jante semi-finie supérieure (30) ;
agencement du matériau central (11) de manière annulaire sur un côté intérieur de la jante semi-finie supérieure (30), et
agencement d'un élément de renforcement (40) de manière annulaire sur un côté intérieur du matériau central (11) ;
**caractérisé en ce que**
le matériau central (11) est désintégrable et peut être retiré dans une étape de désintégration et de retrait du matériau central (11) suivant l'étape de retrait de la seconde jante semi-finie (70) du moule ;
dans lequel, après le retrait de la seconde jante semi-finie (70) du moule ou après le retrait du matériau central (11), une partie de la seconde jante semi-finie (70) et l'anneau de moulage (12) sont retirés pour former une rainure annulaire de pneu (71) ;
dans lequel le matériau central (11) est choisi parmi un métal et une cire ; et
dans lequel le métal ou la cire est chauffé pour fondre et être retiré.

2. Procédé selon la revendication 1, dans lequel le matériau en fibre de carbone inclut au moins un second fil de carbone sec (20) qui inclut une pluralité de fibres de carbone, le au moins second fil de carbone sec (20) est enroulé en continu de manière oblique autour de l'anneau de moulage (12) en plusieurs couches, et des angles d'enroulement de l'au moins un second fil de carbone sec (20) de chaque paire de couches voisines sont différents.

3. Procédé selon la revendication 1, dans lequel un point de fusion de celui choisi parmi un métal et une cire est inférieur à un point de fusion d'une résine appliquée dans l'injection de résine qui est durcie et supérieur à une température de transition vitreuse (Tg) de la résine.
